Europäisches Patentamt

European Patent Office

Office européen des brevets

(19)

(11) Veröffentlichungsnummer: **0 201 734**
**B1**

(12) **EUROPÄISCHE PATENTSCHRIFT**

(45) Veröffentlichungstag der Patentschrift:
08.02.89

(51) Int. Cl.⁴: **H 04 M 13/00, H 04 Q 5/24**

(21) Anmeldenummer: 86105012.8

(22) Anmeldetag: 11.04.86

(54) Einrichtung an einem Fernsprech-Teilnehmeranschluss zur Abschaltung einer von zwei wechselweise automatisch anschaltbaren Sprechstellen von der Vermittlungsstelle aus bei ungewolltem Schleifenschluss in dieser Sprechstelle.

(30) Priorität: 11.05.85 DE 3517088

(43) Veröffentlichungstag der Anmeldung:
20.11.86 Patentblatt 86/47

(45) Bekanntmachung des Hinweises auf die Patenterteilung:
08.02.89 Patentblatt 89/6

(84) Benannte Vertragsstaaten:
AT BE CH DE GB LI LU NL SE

(56) Entgegenhaltungen:
DE-A- 1 933 717
DE-A- 3 140 182
DE-B- 1 054 123

(73) Patentinhaber: Neumann Elektronik GmbH,
Bülowstrasse 104 - 110, D-4330 Mülheim 1 (DE)

(72) Erfinder: Neumann, Dirk, Dipl.-Ing., Schemelsbruch 11,
D-4330 Mülheim 1 (DE)

(74) Vertreter: Feder, Heinz, Dr. et al, Dipl.-Ing. P.-C. Sroka,
Dr. H. Feder Dipl.-Phys. Dr. W.-D. Feder, Patentanwälte
Dominikanerstrasse 37, D-4000 Düsseldorf 11 (DE)

**Beschreibung**

Die Erfindung betrifft eine Einrichtung an einem Fernsprech-Teilnehmeranschluss zur Abschaltung einer von zwei wechselweise automatisch anschaltbaren Sprechstellen von der Vermittlungsstelle aus bei ungewolltem Schleifenschluss in dieser Sprechstelle mit den Merkmalen aus dem Oberbegriff des Patentanspruchs 1.

Es ist bekannt, bei Teilnehmeranschlüssen in Fernsprechanlagen zwei Sprechstellen an eine gemeinsame Fernsprechleitung anschliessbar zu machen, indem zwischen der Fernsprechleitung und den Sprachstellen eine Wechselschaltvorrichtung angeordnet wird, mit deren Hilfe jeweils erkannt wird, wenn an einer der beiden Sprechstellen der Hörer abgehoben wird, d.h. also in der Sprechstelle durch Schliessen des GU-Kontaktes, die Schleife geschlossen wird. Im Ruhezustand beider Sprechstellen sind diese über die Wechselschaltvorrichtung jeweils mit einer Ader der Fernsprechleitung direkt und mit der anderen Ader über eine Vorrichtung zur Erkennung eines Schleifenschlusses verbunden. Wird in einer der Sprechstellen der Hörer abgehoben, so wird diese Sprechstelle auch mit der anderen Fernsprechader direkt verbunden, während die andere Sprechstelle vollständig von der Fernsprechleitung abgetrennt wird. Diese bekannten Wechselschaltvorrichtungen sind im allgemeinen mit bistabilen Relaisschaltungen ausgerüstet.

Mit Hilfe der bekannten Wechselschaltvorrichtungen ist es also möglich, zwei Sprechstellen unabhängig voneinander wechselweise an die gleiche Fernsprechleitung anzuschalten. Ein Nachteil, der hierbei auftritt, besteht darin, dass bei einem Kurzschluss in einer der beiden Sprechstellen diese Sprechstelle dauernd automatisch an die Fernsprechleitung angeschaltet bleibt und damit die andere Sprechstelle dauernd gesperrt ist. Ein solcher Kurzschluss kann auch dadurch zustande kommen, dass beispielsweise der Teilnehmer an der einen Sprechstelle nach Beendigung des Gespräches vergisst, den Hörer auf die Gabel zu legen und somit der GU-Kontakt geschlossen bleibt.

Die der Erfindung zugrundeliegende Aufgabe bestand darin, eine Einrichtung am Teilnehmeranschluss einer Fernsprechanlage der oben erläuterten Art zu schaffen, mit der es möglich ist, beim Vorliegen eines ungewollten Schleifenschlusses in einer der beiden Sprechstellen von der Vermittlungsstelle aus diese Sprechstelle so abzuschalten, dass die andere Sprechstelle über die Wechselschaltvorrichtung wieder an die Fernsprechleitung anschaltbar ist und somit von dieser anderen Sprechstelle aus wieder Gespräche geführt werden können (z.B. DE-A-3 140 182). Nach Beseitigung des Kurzschlusses in der ersten Sprechstelle, beispielsweise wenn der Hörer wieder aufgelegt ist, sollte diese Sprechstelle ohne Zugriff von der Zentrale automatisch wieder in den Zustand zurückgesetzt werden, in dem sie ebenfalls über die Wechselschaltvorrichtung wieder an die Fernsprechleitung anschaltbar ist.

Gemäss einem älteren Vorschlag (DE-A-3 513 598.0) ist eine Einrichtung zur Prüfung einer Fernsprechleitung zwischen einer Vermittlungsstelle und einem Teilnehmeranschluss von der Vermittlungsstelle aus bekannt, mit der die Überprüfung der Fernsprechleitung von der Vermittlungsstelle aus möglich ist, ohne dass der Teilnehmeranschluss in die Prüfung einbezogen wird. Diese ältere Einrichtung besteht grundsätzlich aus zwei Teilen, nämlich einmal einer Umschaltvorrichtung, mit der auf ein von der Vermittlungsstelle über die Leitung gegebenes Steuersignal hin die Fernsprechleitung vom Teilnehmeranschluss abgetrennt und an eine eigene Prüfvorrichtung angeschlossen wird, mittels der dann die Prüfung vorgenommen wird. Nach Abschluss der Prüfung wird die Fernsprechleitung wieder mit dem Teilnehmeranschluss verbunden.

Zur Lösung der obengenannten Aufgabe wird von der obengenannten älteren Einrichtung Gebrauch gemacht und die Lösung geschieht mit den im kennzeichnenden Teil des Patentanspruchs 1 angegebenen Merkmalen.

Vorteilhafte Ausführungsformen der erfindungsgemässen Einrichtung sind in den Unteransprüchen beschrieben.

Wie weiter unten anhand eines Ausführungsbeispiels ausführlich erläutert, kann bei der erfindungsgemässen Einrichtung mit Hilfe der bekannten älteren Einrichtung zum Prüfen der Fernsprechleitung festgestellt werden, ob ein in der Vermittlungsstelle festgestellter Schleifenschluss in der Fernsprechleitung durch eine der beiden Sprechstellen am Teilnehmeranschluss verursacht ist. Es wird in einem solchen Fall von der Prüfvorrichtung ein Setzsignal über die Fernsprechleitung zur Wechselschaltvorrichtung geleitet und gelangt über diese zur Abschaltvorrichtung für die Sprechstelle, in der der ungewollte Schleifenschluss besteht. Durch das ansteuerbare Schaltglied wird diese Sprechstelle von der Wechselschaltvorrichtung abgetrennt, so dass von der anderen Sprechstelle aus wieder Gespräche geführt werden können. Nach der Abschaltung der ersten Sprechstelle wird diese mit Hilfe der Kurzschlussüberwachungsvorrichtung daraufhin überwacht, ob der Schleifenschluss in ihr wieder beseitigt wird, also der Hörer beispielsweise wieder aufgelegt wird. Sobald dies der Fall ist, gibt die Kurzschlussüberwachungsvorrichtung ein Rücksetzsignal auf das ansteuerbare Schaltglied, was zur Folge hat, dass der ursprüngliche Zustand wieder hergestellt wird, also die betreffende Sprechstelle wieder an die Wechselschaltvorrichtung angeschaltet wird, so dass auch von ihr aus wieder Gespräche geführt werden können.

Bei einer besonders vorteilhaften Ausführungsform der erfindungsgemässen Einrichtung sind, wie in Patentanspruch 2 beschrieben, als ansteuerbare Schaltglieder bistabile Relais verwendet. Weiterhin hat es sich als vorteilhaft erwiesen, wenn gemäss Patentanspruch 3 die Speisespannungen für die Abschaltvorrichtungen von der Prüfvorrichtung für die Fernsprechleitung aus zugeführt werden. Wenn dann die Zuführung der Speisespannungen an die Vorrichtung zur Erzeugung der Versorgungsspannungen für die Prüfvorrichtung gemäss Patentanspruch 4 über die Fernsprechleitung erfolgt, wird die gesamte Einrichtung über die Fernsprechleitung mit Speisespannungen versorgt und es sind keine eigenen Spannungsquellen erforderlich.

Schliesslich ist es noch zweckmässig, wenn die den Abschaltvorrichtungen zugeführten Setzsignale wieder zur Prüfvorrichtung zurückgeführt werden und dort ein Prüfsignal auslösen, dessen Frequenz jeweils der abgeschalteten Sprechstelle zugeordnet ist. Dieses Prüfsignal wird über die Fernsprechleitung zur Vermittlungsstelle zurückgeführt, so dass dort genau erkannt werden kann, welche der beiden Sprechstellen einen ungewollten Schleifenschluss besitzt und abgeschaltet worden ist.

Im folgenden wird anhand der Zeichnungen ein Ausführungsbeispiel für die erfindungsgemässe Einrichtung näher erläutert.

In den Zeichnungen zeigen:

Fig. 1 und 2 in schematischer, jeweils aneinander anschliessender Darstellung ein Gesamtschaltbild einer Einrichtung zur Abschaltung von zwei wechselweise an die Fernsprechleitung anschaltbaren Sprechstellen;

Fig. 3 in einem gegenüber Fig. 2 vergrösserten und detaillierteren Schaltbild eine der beiden Abschaltvorrichtungen der Einrichtung nach Fig. 1 und 2;

Fig. 4 in einer Darstellung analog Fig. 2 eine Variante der Ausführungsform der Einrichtung nach Fig. 1 und 2.

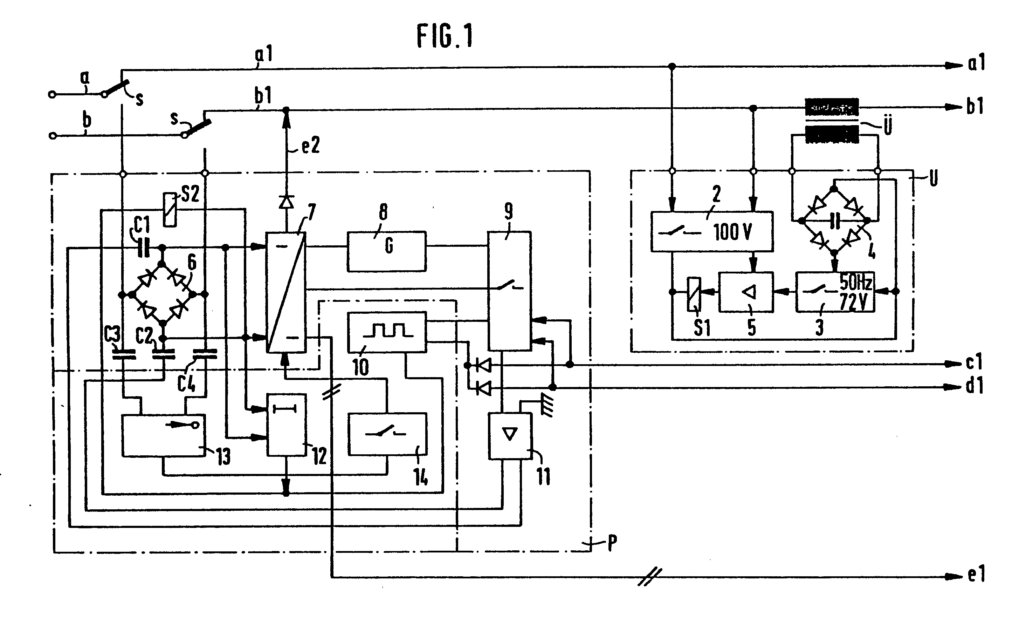

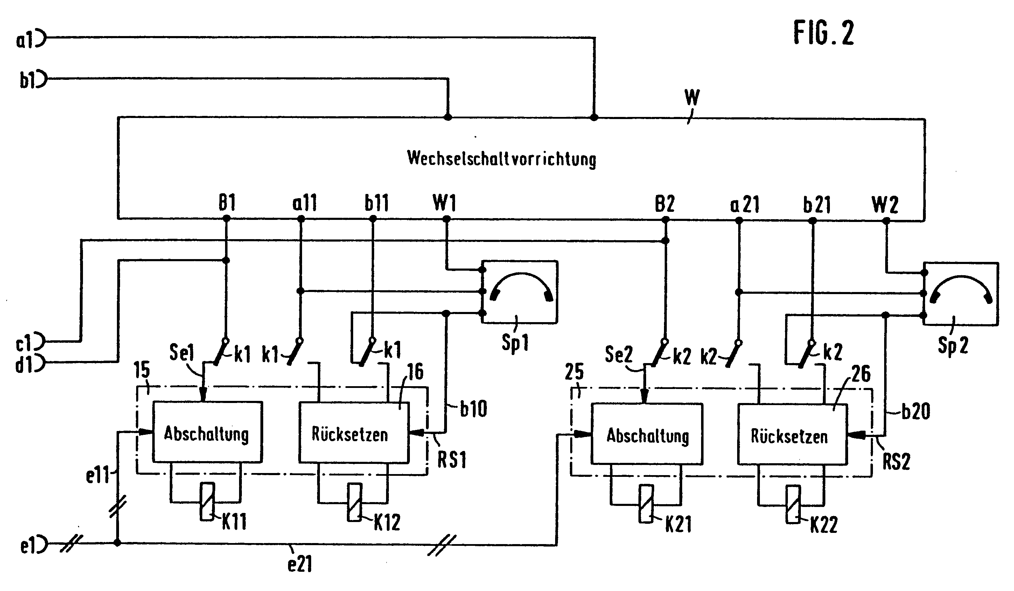

Bei der in den Fig. 1 und 2 dargestellten Schaltung schliessen die am rechten Rand von Fig. 1 endenden Leitungen a1, b1, c1, d1, e1 unmittelbar an die entsprechend in Fig. 2 am linken Rand dargestellten Leitungen a1, b1, c1, d1, e1 an.

Bei der in Fig. 1 und 2 in einem Prinzipschaltbild dargestellten Einrichtung ist eine von einer nicht dargestellten Vermittlungsstelle kommende Fernsprechleitung a, b über Schaltkontakte s an einen weiterführenden Abschnitt der Fernsprechleitung a1, b1 angeschlossen, der zu einer Wechselschaltvorrichtung W führt, an die zwei Sprechstellen Sp1 und Sp2 des Teilnehmeranschlusses angeschlossen sind, die über die Wechselschaltvorrichtung W wechselweise an die Fernsprechleitung a1, b1 angeschaltet werden können.

Die in der an sich bekannten Wechselschaltvorrichtung angeordneten Schaltungsteile, die im wesentlichen aus bistabilen Relaisschaltungen und Schleifenstromerkennungsschaltungen bestehen, sind nicht dargestellt und werden im folgenden nicht näher beschrieben.

Für die Funktion der Gesamteinrichtung ist lediglich von Bedeutung, dass im Ruhezustand des Teilnehmeranschlusses die Ausgänge b11, b21 der Wechselschaltvorrichtung W mit der Ader b1 der Fernsprechleitung verbunden sind.

Beim Abnehmen des Hörers in der Sprechstelle Sp1 wird der Ausgang a11 zusätzlich mit der Ader a1 und der Ausgang B1 mit der Ader b1 der Fernsprechleitung verbunden und der Ausgang b21 von der Ader b1 abgetrennt.

Beim Abnehmen des Hörers in Sprechstelle Sp2 wird zusätzlich der Ausgang a21 mit der Ader a1 und der Ausgang B2 mit der Ader b1 der Fernsprechleitung verbunden und dafür der Ausgang b11 von der Ader b1 abgetrennt.

Dies bedeutet also, dass, wenn die Sprechstelle Sp1 an die Fernsprechleitung a1, b1 angeschlossen ist, gleichzeitig der Ausgang B1 an die Ader b1 angeschlossen ist und wenn die Sprechstelle Sp2 an die Fernsprechleitung a1, b1 angeschlossen ist, gleichzeitig der Ausgang B2 an die Ader b1 angeschlossen ist.

Vor der Wechselschaltvorrichtung W ist, wie in Fig. 1 dargestellt, eine Einrichtung zur Prüfung der Fernsprechleitung von der Vermittlungsstelle aus angeordnet, die eine Umschaltvorrichtung U und eine Prüfvorrichtung P aufweist.

Die Umschaltvorrichtung U ist einerseits durch ein Gleichspannungssteuersignal, beispielsweise eine Erhöhung der Leitungsspannung auf 100 V und andererseits durch ein Wechselspannungssignal ansteuerbar. Zu diesem Zweck enthält die Umschaltvorrichtung U einen an die beiden Zweige a1, b1 der Fernsprechleitung angeschlossenen ersten Steuerschalter 2, der auf eine Erhöhung der Leitungsspannung anspricht. Der erste Steuerschalter 2 kann in an sich bekannter Weise auch so aufgebaut sein, dass er auf eine kurzzeitige Umpolung der Leitungsgleichspannung anspricht. Ein weiterer Steuerschalter 3 ist über eine Gleichrichterbrücke 4 an die Sekundärwicklung eines Übertragers Ü angeschlossen, dessen Primärwicklung in dem Zweig b1 der Fernsprechleitung liegt. Der zweite Steuerschalter 3 spricht auf ein über die Fernsprechleitung gesendetes Wechselspannungssignal an. Beide Steuerschalter 2 und 3 sind über einen Schaltverstärker 5 mit einer ersten Wicklung S1 eines bistabilen Relais verbunden, dessen Schaltkontakte s in der Fernsprechleitung a, b von der Vermittlungsstelle aus gesehen, vor der Umschaltvorrichtung U angeordnet sind. Beim Ansteuern der ersten Wicklung S1 des bistabilen Relais wird die Fernsprechleitung a, b über die Schaltkontakte s von dem zur Wechselschaltvorrichtung W führenden Abschnitt a1, b1 und der Umschaltvorrichtung U getrennt und an eine Prüfvorrichtung P angeschlossen.

Die Prüfvorrichtung P enthält eine über eine zum Schutz gegen Leitungsumpolungen angeordnete Gleichrichterbrücke 6 angeschlossene Vorrichtung 7 zur Erzeugung der für die Prüfvorrichtung notwendigen Versorgungsspannungen. Weiterhin enthält sie mehrere Niederfrequenz-Oszillatoren, die in der Zeichnung gemeinsam mit 8 bezeichnet sind. Die Prüfsignale laufen über Niederfrequenz-Schaltvorrichtungen 9, die von einem in einer Steuervorrichtung St enthaltenen Taktgeber 10 aus gesteuert werden. Die Prüfsignale laufen weiter über einen Verstärker 11 und Kondensatoren C1, C2 in die Fernsprechleitung a, b.

In der Steuervorrichtung St befindet sich noch eine Rufsignalerkennungsschaltung 13, die einen Rufsignalschalter 14 ansteuert, der seinerseits mit einem Einschaltelement der Vorrichtung 7 zur Erzeugung der Versorgungsspannungen verbunden ist. Die Rufsignalerkennungsschaltung 13 ist über Kondensatoren C3 und C4 an die Fernsprechleitung a, b angeschlossen. Weiterhin ist ein Zeitschalter 12 an die Fernsprechleitung a, b angeschlossen, der mit einer zweiten Wicklung S2 des bistabilen Relais verbunden ist. Ein Signalausgang des Taktgebers 10 ist ebenfalls mit der zweiten Wicklung S2 des bistabilen Relais verbunden. Weiterhin ist ein Ausgang der Vorrichtung 7 mit der Ader b1 des zur Wechselschaltvorrichtung W führenden Abschnitts der Fernsprechleitung a1, b1 verbunden.

Zwischen der Wechselschaltvorrichtung W und den beiden Sprechstellen Sp1 und Sp2 sind jeweils Schaltungen 15 bzw. 25 angeordnet, durch die eine rücksetzbare Abtrennung der Sprechstellen Sp1 bzw. Sp2 von der Wechselschaltvorrichtung W möglich ist.

Wie Fig. 2 zu entnehmen besitzt die der Sprechstelle Sp1 zugeordnete Abschaltvorrichtung 15 ein bistabiles Relais mit einer Setzwicklung K11 und einer Rücksetzwicklung K12. Die Schaltkontakte k1 dieses Relais sind so angeordnet, dass sie im nicht gesetzten Zustand des Ausgang b11 der Wechselschaltvorrichtung W mit der Sprechstelle Sp1 und den Ausgang B1 über den Setzeingang Se1 mit der Setzwicklung K11 verbinden. Weiterhin ist eine unten näher erläuterte Kurzschlussüberwachungsschaltung 16, die die Rücksetzwicklung K12 enthält, einerseits über einen Rücksetzeingang RS1 und eine Leitung b10 ständig mit der Sprechstelle Sp1 verbunden und über die Schaltkontakte k1 mit den Ausgängen a11, b11 der Wechselschaltvorrichtung W verbindbar.

In analoger Weise weist die der Sprechstelle Sp2 zugeordnete Abschaltvorrichtung 25 ein bistabiles Relais mit einer Setzwicklung K21 und einer Rücksetzwicklung K22 und Schaltkontakten k2 auf, über die im nicht gesetzten Zustand der Ausgang b21 mit der Sprechstelle Sp2 und der Ausgang B2 über den Setzeingang Se2 mit der Setzwicklung K21 verbunden ist. Die Kurzschlussüberwachungsvorrichtung 26 weist die Rücksetzwicklung K22 auf und ist über den Rücksetzeingang RS2 mit der Sprechstelle Sp2 verbunden und über die Schaltkontakte k2 mit den Ausgängen a21 und b21 der Wechselschaltvortung W verbindbar.

Speisespannungseingänge der Abschaltvorrichtungen 15 und 25 sind über Leitungen e11, e21 und e1 an die Vorrichtung 7 zur Erzeugung der Versorgungsspannungen in der Prüfvorrichtung P angeschlossen.

Weiterhin ist der Ausgang B1 der Wechselschaltvorrichtung W über eine Leitung d1 in der aus Fig. 1 ersichtlichen Weise mit der Prüfvorrichtung P verbunden, während in analoger Weise der Ausgang B2 über die Leitung c1 ebenfalls mit der Prüfvorrichtung P verbunden ist.

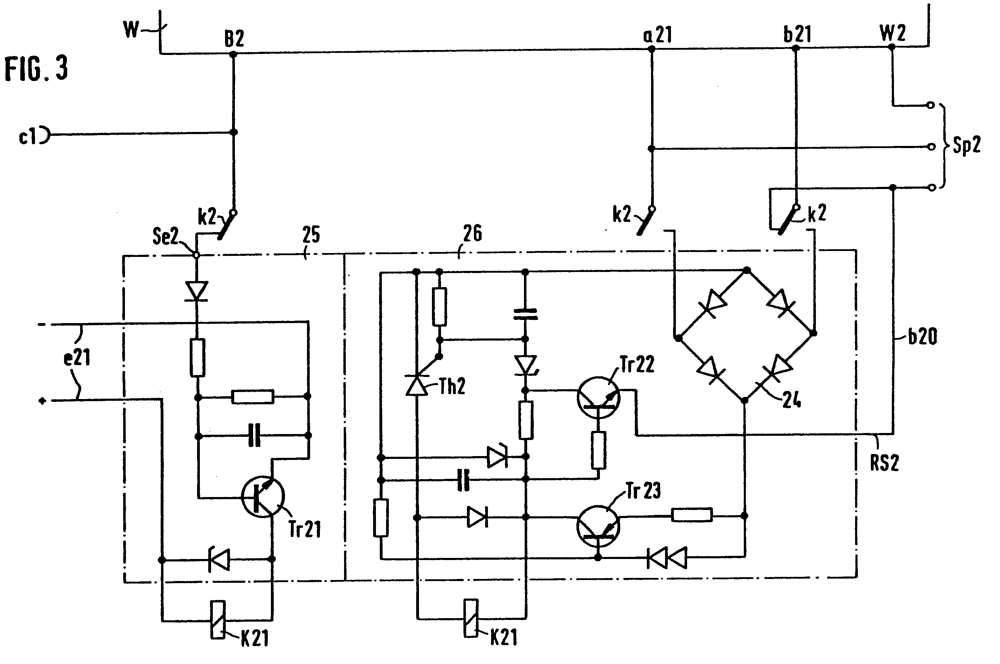

Zur näheren Erläuterung des Aufbaus der Abschaltvorrichtung 25 und der Kurzschlussüberwachungsschaltung 26 dient Fig. 3.

Die Abschaltvorrichtung 15 und die Kurzschlussüberwachungsschaltung 16 sind analog aufgebaut.

Wie Fig. 3 zu entnehmen, liegt die Setzwicklung K21 des bistabilen Relais in einem Stromkreis, der einen Transistor Tr21 enthält, dessen Basis über den Setzeingang Se2 an den Ausgang B2 der Wechselschaltvorrichtung W angeschlossen ist.

In der Kurzschlussüberwachungsschaltung 26 liegt die Rücksetzwicklung K22 des bistabilen Relais in einem Stromkreis, der von einer über die Schaltkontakte k2 an die Ausgänge a21 und b21 der Wechselschaltvorrichtung W angeschlossenen Gleichrichterbrücke 24 über einen Transistor Tr23, die Relaiswicklung K22 und einen Thyristor Th2 zurück zur Gleichrichterbrücke 24 läuft. Parallel zu diesem Stromkreis läuft ein Steuerkreis, der vom Rücksetzeingang RS2 über den Transisitor Tr22 und den Transisitor Tr23 zur Gleichrichterbrücke 24 läuft.

Die Funktionsweise der in den Fig. 1 bis 3 dargestellten Einrichtung wird nachfolgend erläutert:

Wenn in einer der beiden Sprechstellen, also beispielsweise der Sprechstelle Sp2, ein Kurzschluss auftritt, oder ungewollt der Hörer abgenommen und liegengelassen wird, ist diese Sprechstelle Sp2 aufgrund der Wirkungsweise der Wechselschaltvorrichtung W über die Schaltkontakte k2 und die Ausgänge a21, b21 ständig an die Fernsprechleitung a1, b1, angeschlossen.

Dies bewirkt, dass andererseits die Sprechstelle Sp1 abgetrennt ist und von ihr keine Gespräche geführt werden können.

Es läuft nun folgender, von der Vermittlungsstelle aus eingeleiteter Prüfvorgang ab:

Zunächst wird die Einrichtung zur Prüfung der Fernsprechleitung aktiviert, indem von der Vermittlungsstelle aus eine Spannungserhöhung der Leitungsspannung, beispielsweise von 60 V auf 100 V, vorgenommen wird.

Durch dieses Steuersignal wird in der Umschaltvorrichtung U der erste Steuerschalter 2 aktiviert und über den Schaltverstärker 5 die Relaiswicklung S1 erregt, so dass die Relaiskontakte s umschalten und somit der Prüfvorrichtung P an die Fernsprechleitung a, b angeschlossen ist.

Stellt sich heraus, dass infolge eines Kurzschlusses oder des Schleifenschlusses das Gleichspannungssteuersignal nicht angelegt werden kann, so wird ein Wechselspannungssignal ausgesandt, durch das der zweite Steuerschalter 3 aktiviert wird, wodurch ebenfalls die erste Relaiswicklung S1 erregt wird und die Relaiskontakte s umschalten.

Es wird nunmehr von der Vermittlungsstelle aus ein Rufsignal ausgesandt, das von der Ruferkennungsschaltung 13 aufgenommen wird. Hierdurch wird über den Rufsignalschalter 14 die Vorrichtung 7 zur Erzeugung der Versorgungsspannungen für die Prüfvorrichtung P eingeschaltet, die ihre Speisespannung aus der Fernsprechleitung erhält.

Mit der Aktivierung der Vorrichtung 7 werden alle Einzelvorrichtungen der Prüfvorrichtung P eingeschaltet.

Weiterhin wird ein Gleichspannungssteuersignal über die Leitung e2 auf die Ader b1 zur Wechselschaltvorrichtung W gegeben. Dort ist infolge des dargestellten Schaltzustandes der Ausgang B2 mit der Ader b1 verbunden, so dass das Gleichspannungssteuersignal auf den Setzeingang Se2 gelangt. Gleichzeitig läuft das Gleichspannungssteuersignal über die Leitung c1 zurück zur Prüfvorrichtung P und steuert die Niederfrequenz-Schaltvorrichtungen 9 so, dass ein bestimmtes, von den Niederfrequenz-Oszillatoren 8 ausgehendes Signal erzeugt und in die Fernsprechleitung a, b gegeben wird, so dass in der Vermittlungsstelle erkannt werden kann, dass die Störung in der Sprechstelle Sp2 zu suchen ist.

Durch das Gleichspannungssteuersignal wird ausserdem die Setzwicklung K21 aktiviert und die Schaltkontakte k2 werden umgeschaltet. In diesem gesetzten Zustand ist nunmehr die Abschaltvorrichtung vom Ausgang B2 abgetrennt. Weiterhin ist die Kurzschlussüberwachungsvorrichtung 26 anstelle der Sprechstelle Sp2 an die Ausgänge a21 und b21 der Wechselschaltvorrichtung W angeschlossen. Damit ist der Abtrennvorgang der Sprechstelle Sp2 zunächst beendet. Es können jetzt weitere Prüfzyklen durchgeführt werden. Hierzu können von den Niederfrequenz-Oszillatoren 8 die entsprechenden Prüfsignale abgegeben werden, die vom Taktgeber 10 derart getaktet werden, dass ein Prüfzyklus entsteht, bei dem in vorgegebenen Zeitabständen eine vorgegebene Anzahl von niederfrequenten Prüfsignalen über den Verstärker 11 in die Fernsprechleitung a, b gegeben wird. Durch den letzten Takt des Taktgebers 10 wird dann die zweite Relaiswicklung S2 erregt und die Kontakte s des bistabilen Relais schalten wieder um, so dass die Prüfvorrichtung P wieder von der Fernsprechleitung a, b abgetrennt ist und dafür die Umschaltvorrichtung U und die Wechselschaltvorrichtung W wieder mit der Vermittlungsstelle verbunden sind.

Der in der Steuervorrichtung St enthaltene Zeitschalter 12 dient in erster Linie dazu sicherzustellen, dass nach Ablauf einer bestimmten Zeit, unabhängig davon, ob der Prüfzyklus ordnungsgemäss ablaufen konnte, ein Rücksetzsignal abgegeben wird, durch das die zweite Relaiswicklung S2 erregt und die Prüfvorrichtung abgeschaltet wird.

Nach dem Abschalten der Prüfvorrichtung kann also im vorliegenden Fall von der Sprechstelle Sp1 wieder ein normales Gespräch geführt werden, während die Sprechstelle Sp2 abgetrennt bleibt.

In diesem abgetrennten Zustand sind durch den Kurzschluss oder Schleifenschluss in der Sprechstelle Sp2 das eine Ende der Gleichrichterbrücke 24 über die Sprechstelle Sp2 mit der zum Rücksetzeingang RS2 führenden Leitung b20 verbunden, während das andere Ende der Gleichrichterbrücke 24 über den Kontakt K2 mit dem Ausgang b21 der Wechselschaltvorrichtung W verbunden ist, der wie oben erläutert, auch im Ruhezustand mit der Ader b1 der Fernsprechleitung verbunden ist und von dort aus ein positives Potential erhält. Es fliesst somit ständig ein konstanter Strom mit geringer Stromstärke in den durch die Transisitoren Tr22 und Tr23 gekennzeichneten Stromkreis. Aufgrund der sich einstellenden Spannungsverhältnisse bleibt der Thyristor Th2 gesperrt und es fliesst kein Strom durch die Rücksetzwicklung K22 des bistabilen Relais.

Wird nun in der Sprechstelle Sp2 der Kurzschluss beseitigt, bzw. der Hörer aufgelegt, so wird die direkte Verbindung zwischen dem Setzeingang RS2 und dem mit dem Ausgang a21 verbundenen Punkt der Gleichrichterbrücke unterbrochen, der Transisitor Tr22 sperrt und aufgrund der Änderung der Spannungsverhältnisse zündet der Thyristor Th2. Es fliesst nunmehr ein Strom über die Rücksetzwicklung K22 und die Schaltkontakte k2 werden wieder umgeschaltet. Damit befindet sich die Sprechstelle Sp2 wieder in dem normalen Ausgangszustand, indem sie über die Wechselschaltvorrichtung W mit der Fernsprechleitung a1, b1 verbindbar ist.

Ausserdem ist auch die Abschaltvorrichtung 25 wieder mit dem Ausgang B2 verbunden, so dass erneut eine Abschaltung vorgenommen werden könnte.

Analoge Vorgänge, die nicht näher erläutert werden, laufen ab, wenn in der Sprechstelle Sp1 ein Kurzschluss auftritt oder der Hörer nicht aufgelegt wird.

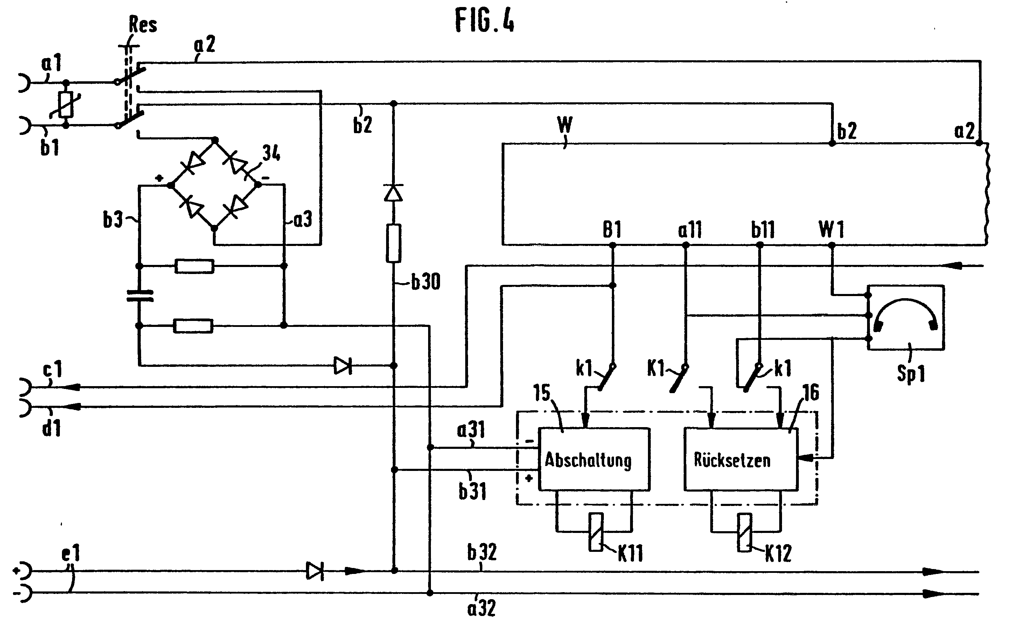

In Fig. 4 ist eine Variante der Einrichtung nach Fig. 1 bis 3 dargestellt, bei der es für den Benutzer des Teilnehmeranschlusses möglich ist, von sich aus eine der beiden Sprechstellen Sp1 oder Sp2 abzuschalten, wenn er erkannt hat, dass ein Kurzschluss vorliegt.

In Fig. 4 sind zur Bezeichnung gleicher Teile die gleichen Bezugszeichen wie in den Fig. 1 bis 3 verwendet, bezüglich deren näherer Erläuterung auf die obengenannte Beschreibung zu Fig. 1 bis 3 verwiesen wird.

Wird bei der Schaltungsvariante nach Fig. 4 der zwischen den Abschnitt a1, b1 und den zur Wechselschaltvorrichtung W führenden Abschnitt a2, b2 der Fernsprechleitung eingeschaltete Umschalter Res gedrückt, so wird die Wechselschaltvorrichtung W kurzzeitig von der Fernsprechleitung a1, b1 abgetrennt. Dafür werden über eine Gleichrichterbrücke 34 und Leitungen b3 und a3 sowie a31, b31 bzw. b32 die Speisespannungseingänge der Abschaltvorrichtungen 15 bzw. 25 an die Fernsprechleitung a1, b1 angeschlossen. Dabei ist die Leitung b3 über eine Verbindungsleitung b30 mit der zur Wechselschaltvorrichtung W führenden Ader b2 verbunden.

Der Umschalter Res kann auch an einer anderen Stelle der Fernsprechleitung, beispielsweise im Abschnitt a, b von den Schaltkontakten s (Fig. 1) angeordnet sein.

Es laufen beim Drücken des Umschalters Res folgende Vorgänge ab:

Der Kurzschluss befindet sich diesmal in der Sprechstelle Sp1, die dadurch an die Adern a2 und b2 angeschlossen ist. Die Abschaltvorrichtung 15 erhält aus der Fernsprechleitung a1, b1 über die Leitungen a31 und b31 ihre Speisespannung, während gleichzeitig ein positives Signal über die Verbindungsleitung b30 zur Ader b2 und durch die Wechselschaltvorrichtung W zum Ausgang B1 läuft, durch das die Setzwicklung K11 aktiviert und die Umschalter k1 betätigt werden. Die Abschaltvorrichtung ist damit gesetzt und die Sprechstelle Sp1 von der Wechselschaltvorrichtung W abgetrennt. Dieser Zustand hält an, wenn der Umschalter Res wieder losgelassen und damit die Wechselschaltvorrichtung W wieder an die Fernsprechleitung a1, b1 angeschlossen ist. Es können nun von der Sprechstelle Sp2 aus wieder Gespräche geführt werden. Das Rücksetzen der Abschaltvorrichtung für die Sprechstelle Sp1 erfolgt in der gleichen Weise wie oben beschrieben durch die Kurzschlussüberwachungsvorrichtung 16.

## Patentansprüche

1. Einrichtung an einem Fernsprech-Teilnehmeranschluss zur Abschaltung einer von zwei wechselweise automatisch anschaltbaren Sprechstellen (Sp1, Sp2) von der Vermittlungsstelle aus bei ungewolltem Schleifenschluss in dieser Sprechstelle, mit einer zwischen der Fernsprechleitung und den Sprechstellen angeordneten Wechselschaltvorrichtung (W), durch welche jeweils beim Schliessen der Schleife in einer der beiden Sprechstellen diese Sprechstelle an die Fernsprechleitung angeschaltet und die andere Sprechstelle abgetrennt wird und mit einer Einrichtung (P) zur Prüfung der Fernsprechleitung zwischen der Vermittlungsstelle und dem Teilnehmeranschluss von der Vermittlungsstelle aus die eine unmittelbar vor dem Teilnehmeranschluss an die Fernsprechleitung angeschlossene, durch ein von der Vermittlungsstelle ausgesendetes Steuersignal ansteuerbare Umschaltvorrichtung (U) zur Abtrennung des Teilnehmeranschlusses von der Fernsprechleitung und zur Anschaltung einer Prüfvorrichtung (P) an die Fernsprechleitung aufweist, wobei in der Prüfvorrichtung eine Vorrichtung zur Erzeugung von Versorgungsspannungen angeordnet ist und durch die Prüfvorrichtung Prüfsignale vorgegebener Frequenz in die Fernsprechleitung abgegeben werden und nach Ablauf des Prüfzyklus ein Rücksetzsignal an die Umschaltvorrichtung gegeben wird zur Wiederanschaltung des Teilnehmeranschlusses an die Fernsprechleitung, dadurch gekennzeichnet, dass der Wechselschaltvorrichtung (W) und den beiden Sprechstellen (Sp1, Sp2) jeweils eine Abschaltvorrichtung (15, 25) zur Abtrennung der betreffenden Sprechstelle von der Wechselschaltvorrichtung (W) angeordnet ist, die ein in der Verbindungsleitung zwischen Sprechstelle (Sp1, Sp2) und Wechselschaltvorrichtung (W) angeordnetes bistabiles, ansteuerbares Schaltglied (K11-K12, k1, K21-K22-k2) mit einem Setzeingang (Se1, Se2) und einem Rücksetzeingang (RS1, RS2) aufweist, wobei der Setzeingang (Se1, Se2) über die Wechselschaltvorrichtung (W) mit der Fernsprechleitung (a1, b1) verbunden ist und der Rücksetzeingang (RS1, RS2) an eine mit dem Eingang der Sprechstelle (Sp1, Sp2) verbundene Kurzschlussüberwachungsvorrichtung (16, 26) angeschlossen ist, die ein Rücksetzsignal abgibt, sobald ein in der Sprechstelle (Sp1, Sp2) nach ihrer Abtrennung von der Wechselschaltvorrichtung (W) vorhandener Schleifenschluss unterbrochen wird und dass die Vorrichtung (7) zur Erzeugung von Versorgungsspannungen in der Prüfvorrichtung (P) mit einer Ader (b1) des zur Wechselschaltvorrichtung (W) führenden Abschnittes der Fernsprechleitung (a1, b1) zur Zuführung eines Setzsignals verbunden ist.

2. Einrichtung nach Anspruch 1, dadurch gekennzeichnet, dass als ansteuerbare Schaltglieder bistabile Relais dienen, deren Schaltkontakte (k1, k2) in der Verbindungsleitung zwischen der Wechselschaltvorrichtung (W) und den Sprechstellen (Sp1, Sp2) liegen, deren Setzwicklungen (K11, K21) jeweils an einen Ausgang (B1, B2) der Wechselschaltvorrichtung (W) angeschlossen sind, der zusammen mit der jeweiligen Sprechstelle (Sp1, Sp2) an die Fernsprechleitung (a1, b2) angeschaltet wird und deren Rücksetzwicklung (K12, K22) jeweils in einem Steuerkreis liegen, der bei von der Wechselschaltvorrichtung (W) abgetrennter Sprechstelle (Sp1, Sp2) an diese so angeschlossen ist, dass durch eine Unterbrechung der Schleife in der Sprechstelle ein über die Rücksetzwicklung (K12, K22) führender Stromkreis (24-Tr23-K22-Th2-24) angeschlossen wird.

3. Einrichtung nach Anspruch 1 oder 2, dadurch gekennzeichnet, dass die Vorrichtung (7) zur Erzeugung von Versorgungsspannungen in der Prüfvorrichtung (P) mit Speiseeingängen der Abschaltvorrichtungen (15, 25) verbunden ist.

4. Einrichtung nach einem der Ansprüche 1 bis 3, dadurch gekennzeichnet, dass die Zuführung der Speisespannungen an die Vorrichtung (7) zur Erzeugung der Versorgungsspannungen für die Prüfvorrichtung (P) über die Fernsprechleitung (a, b) erfolgt.

5. Einrichtung nach einem der Ansprüche 1 bis 4, dadurch gekennzeichnet, dass der Setzeingang (Se1, Se2) jeder Abschaltvorrichtung (15, 25) mit der Prüfvorrichtung (P) verbunden ist und durch das zur Prüfvorrichtung (P) zurückgeführte Setzsignal ein Prüfsignal mit einer vorgegebenen, jeweils einer der Sprechstellen (Sp1, Sp2) zugeordneten Frequenz erzeugt und in die Fernsprechleitung (a, b) abgegeben wird.

6. Einrichtung nach einem der Ansprüche 1 bis 5, dadurch gekennzeichnet, dass in der Fernsprechleitung (a1, b1) vor der Wechselschaltvorrichtung (W) ein Umschalter (Res) vorgesehen ist, über den die Speisespannungseingänge der Abschaltvorrichtungen (15, 25) mit der Fernsprechleitung (a1, b1) verbindbar sind, wobei jeder dieser Speisespannungseingänge mit einer Ader (b2) des hinter dem Umschalter (Res) zur Wechselschaltvorrichtung (W) führenden Abschnittes (a2, b2) der Fernsprechleitung verbunden ist.

**Claims**

1. A device in a telephone subscriber connection for switching off, by a signal from the telephone exchange, one of two alternatively automatically connectable user's stations (Sp1, Sp2) when an inadvertent loop-closure occurs at this user's station; with a switch-over device (W) interposed between the telephone line and the user's stations which, when the loop is closed in one of the two user's stations, connects this one to the telephone line and disconnects the other one; and with a testing device (P) for testing, from the telephone exchange, the telephone line between the telephone exchange and the subscriber connection; there being connected to the telephone line, just before the subscriber connection, a switch-over device (U) which is activated by a control signal from the telephone exchange for disconnecting the subscriber connection from the telephone line and connecting the testing device instead; the testing device containing a source for producing supply voltages; the testing device delivering test signals at a specified frequency to the telephone line and then, after completion of the test cycle, a re-set signal to the switch-over device for re-connecting the subscriber connection to the telephone line; characterised in that between the switch-over device (W) and each user's station (Sp1, Sp2) there is interposed a disconnected-device (15, 25) for disconnecting this user's station (Sp1, Sp2) from he switch-over device; each disconnect-device (15, 25) having, interposed in the conductor between the user's station (Sp1, Sp2) and the switch-over device (W), a bistable switch (K11-K12, k1, K21-K22-k2) with a set terminal (Se1, Se2) and a re-set terminal (RS1, RS2); the set terminal (Se1, Se2) being connected, in each case, over the switch-over device (W) to the telephone line (a1, b1), the re-set terminal (RS1, RS2) being connected to a short-circuit monitor (16, 26) connected to the input terminal of the user's station; each short-circuit monitor (16, 26) delivering a re-set signal as soon as the loop in its user's station (Sp1, Sp2) is interrupted after separation from the switch-over device (W); and in that the source (7) for delivering supply-voltages to the testing device (P) is connected to a lead (b1) of the telephone line (a1, b1) connected to the switch-over device (W), for delivering a set signal.

2. Device as claimed in Claim 1, characterised in that there are used as control switched bistable relays whose switching contacts (k1, k2) are interposed in the connecting conductor between the switch-over device (W) and the user's stations (Sp1, Sp2); whose set-windings (K11, K21) are each connected to an output terminal (B1, B2) of the switch-over device (W) which, together with the relevant user's station (Sp1, Sp2), is connected to the telephone line (a1, b1); their re-set windings (K12, K22) being connected, in each case, to a control circuit connected to a user's station (Sp1, Sp2) separated from the switch-over device (W); the connection being arranged in such a way that when the loop is interuppted in the user's station this closes a circuit (24-Tr23-K22-Th2-24) allowing current to flow over the re-set winding (K12, K22).

3. Device as claimed in Claims 1 or 2, characterised in that the device (7) for providing supply voltages in the testing device (P) is connected to feed-terminals of the disconnect-device (15, 25).

4. Device as claimed in one of the Claims 1 to 3, characterised in that the supply voltages for the testing device (P) are fed to the device (7) over the telephone line (a, b).

5. Device as claimed in one of the Claims 1 to 4, characterised in that the set input terminal (Se1, Se2) of each disconnect-device (15, 25) is connected to the testing device (P); and in that the set-signal returned to the testing device (P) produces a test signal at a specified frequency allocated to one of the user's stations (Sp1, Sp2), the test signal being delivered to the telephone line (a, b).

6. Device as claimed in one of the Claims 1 to 5, characterised in that a further switch-over device (Res) is interposed in the telephone line (a1, b1) before the switch-over device (W); over which the supply-voltage input terminals of the disconnect-devices can be connected to the telephone line (a1, b1); each of these supply-voltage input terminals being connected to one conductor (b2) of the portion (a2, b2) of the telephone line which leads, behind the further switch-over device (Res), to the switch-over device (W).

**Revendications**

1. Dispositif monté sur une prise téléphonique destiné à déconnecter l'un des postes (Sp1, Sp2) pouvant être automatiquement connecté en alternance à partir de la centrale en cas de fermeture involontaire de la boucle dans cette position conversationelle, comportant un dispositif (W) de commutation alternée disposé entre la ligne téléphonique et les deux postes, dispositif grâce auquel, en cas de fermeture respective de la boucle dans l'un des deux postes, ce poste est connecté sur la ligne, l'autre poste étant déconnecté et comportant un dispositif (P) pour le contrôle de la ligne téléphonique entre la centrale et la prise de l'abonné à partir de la centrale, qui présente un dispositif de commutation (U) connecté à la ligne téléphonique directement avant la prise de l'abonné, dispositif pouvant être commandé par un signal de commande émis par la centrale en vue de déconnecter la prise de l'abonné de la ligne téléphonique et pour connecter un dispositif de contrôle (P) sur la ligne téléphonique, dans le dispositif étant disposé un dispositif pour la génération de tensions d'alimentation et ledit dispositif de contrôle émettant des signaux de contrôle d'une fréquence prédéterminée dans la ligne téléphonique et un signal de retour étant émis vers le dispositif de commutation après l'écoulement du cycle de contrôle afin de reconnecter la prise de l'abonné à la ligne téléphonique, caractérisé par le fait qu'entre le dispositif (W) et les deux postes (Sp1, Sp2) est disposé respectivement un dispositif de déconnexion (15, 25) pour déconnecter le poste concerné du dispositif de commutation alternée (W) qui présente un élément de commutation (K11-K12, k1, K-21-K22-k2) pouvant être commandé, bistable, disposé dans la ligne entre le poste (Sp1, Sp2) et le dispositif de commutation alternée (W) et comportant une entrée de montage (Se1, Se2) et une entrée de démontage (RS1, RS2) l'entrée de montage (Se1, Se2) étant reliée à la ligne téléphonique (a1, b1) par un dispositif (W) de connexion alternée et l'entrée de démontage (RS1, RS2) étant raccordée à un dispositif (16, 26) de surveillance des courts-circuits reliés à l'entrée du poste (Sp1, Sp2), le dispositif (16, 26) délivrant un signal de démontage dès qu'il y a interruption d'une fermeture de boucle présente dans le poste (Sp1, Sp2) après déconnexion du dispositif (W) et par le fait que le dispositif (7) destiné à générer des tensions d'alimentation dans le dispositif de contrôle (P) est relié à un conducteur (b1) du segment de la ligne téléphonique (a1, b1) conduisant au dispositif (W) afin d'amener un signal de montage.

2. Dispositif selon la revendication 1, caractérisé par le fait que des relais bistables servent d'éléments de commutation pouvant être commandés, leur contact (k1, k2) étant situés dans la ligne de connexion entre le dispositif (W) et le poste (Sp1, Sp2), les enroulements (K11, K21) de ces relais étant raccordés respectivement à une sortie (B1, B2) du dispositif (W) qui est raccordé ensemble avec le poste respectif (Sp1, Sp2) à la ligne téléphonique (a1, b2) et dont les enroulements de démontage (K12, K22) sont situés respectivement dans un circuit de commande qui, lorsque le poste (Sp1, Sp2) est déconnecté du dispositif (W), est raccordé à ce poste de telle sorte que par une interruption de la boucle dans le poste, un circuit (24-Tr23-K22-Th2-24) conduisant dans l'enroulement de démontage (K12, K22) est fermé.

3. Dispositif selon la revendication 1 ou 2, caractérisé par le fait que le dispositif (7) destiné à générer des tensions d'alimentation dans le dispositif de commande (P) est relié à des entrées d'alimentation du dispositif de déconnexion (15, 25).

4. Dispositif selon l'une des revendications 1 à 3, caractérisé par le fait que l'arrivée des tensions d'alimentation au dispositif (7) destiné à produire les tensions d'alimentation pour le dispositif de contrôle (P) s'effectue par la ligne téléphonique (a, b).

5. Dispositif selon l'une des revendications 1 à 4, caractérisé par le fait que l'entrée de montage (Se1, Se2) de chaque dispositif de déconnexion (15, 25) est relié au dispositif de contrôle (P) et que le signal de montage reconduit vers le dispositif de contrôle produit un signal de contrôle à une fréquence prédéterminée affectée respectivement à l'un des postes (Sp1, Sp2), ce signal étant émis dans la ligne téléphonique (a, b).

6. Dispositif selon l'une des revendications 1 à 5, caractérisé par le fait que dans la ligne téléphonique (a1, b1) est prévu, avant le dispositif (W), un commutateur (Res), par lequel les entrées des tensions d'alimentation des dispositifs de déconnexion (15, 25) peuvent être réliés à la ligne téléphonique (a1, b1), chacune de ces entrées de la tension d'alimentation étant reliée à un conducteur (b2) du segment (a2, b2) de la ligne téléphonique conduisant vers le dispositif (W), derrière le commutateur (Res).

# FIG.1

FIG.2

Wechselschaltvorrichtung

W

B1  a11  b11  W1        B2  a21  b21  W2

Sp1        Sp2

Se1  k1  k1  k1
15        16  b10
RS1

Se2  k2  k2  k2
25        26  b20
RS2

Abschaltung  Rücksetzen        Abschaltung  Rücksetzen

e11

K11  K12        K21  K22

e1  e21

EP 0 201 734 B1

FIG. 3

EP 0 201 734 B1

# FIG.4

EP 0 201 734 B1